# EUROPÄISCHE PATENTSCHRIFT

(11) **EP 3 882 733 B1**
(45) Veröffentlichungstag und Bekanntmachung des Hinweises auf die Patenterteilung: **02.11.2022**
(21) Anmeldenummer: 21160267.7
(22) Anmeldetag: 02.03.2021
(51) Int. Cl.: G05D 1/02, B62D 15/02, G08G 1/14

(54) **VERFAHREN UND SYSTEM ZUM AUTONOMEN FAHREN EINES FAHRZEUGS**
METHOD AND SYSTEM FOR AUTONOMOUS DRIVING OF A VEHICLE
PROCÉDÉ ET SYSTÈME DE CONDUITE AUTONOME D'UN VÉHICULE

(30) Priorität: 16.03.2020 DE 102020107108
(43) Veröffentlichungstag der Anmeldung: 22.09.2021
(73) Patentinhaber: Kopernikus Automotive GmbH, 04179 Leipzig (DE)
(72) Erfinder: JENZOWSKY, Stefan, 91325 Adelsdorf (DE)
(74) Vertreter: Seemann & Partner Patentanwälte mbB

(56) Entgegenhaltungen:
- DE-A1-102014 224 075
- DE-A1-102015 002 405
- DE-B3-102015 007 531
- US-A1- 2014 372 016
- US-A1- 2020 064 860
- KYOUNGHWAN AN ET AL: "Cooperative vehicle control system based on fusion map", COMPUTING AND CONVERGENCE TECHNOLOGY (ICCCT), 2012 7TH INTERNATIONAL CONFERENCE ON, IEEE, 3. Dezember 2012 (2012-12-03), Seiten 94-97, XP032421998, ISBN: 978-1-4673-0894-6
- BOONSIM NOPPAKUN ET AL: "Car make and model recognition under limited lighting conditions at night", PATTERN ANALYSIS AND APPLICATIONS, SPRINGER, NEW YORK, NY, US, Bd. 20, Nr. 4, 23. Mai 2016 (2016-05-23), Seiten 1195-1207, XP036344194, ISSN: 1433-7541, DOI: 10.1007/S10044-016-0559-6 [gefunden am 2016-05-23]

## Beschreibung

Einige Ausführungen beziehen sich auf ein Verfahren und System zur Steuerung eines autonomen Fahrzeugs (z.B. eines serienmäßigen PKW) in Automatic Valet Parking-Anwendungen, deren Fahrtkontrolle und Fahrplanung durch ein externes Kontrollsystem mittels einer Künstlichen Intelligenz vorgenommen wird, die das Fahrzeug über externe Sensoren, insbesondere Kamerasensoren, überwacht und kontrolliert.

### Stand der Technik

Der Vorgang des Parkens eines Fahrzeugs wird heute durch verschiedene Assistenzsysteme unterstützt, z.B. durch Verfahren zur Unterstützung eines Fahrers eines Fahrzeugs bei einem Parkvorgang (siehe u.a. die Offenlegungsschriften DE102008027692A1, DE102012008858A1, WO2011154242A1). Weiterhin wird die Parkplatzerkennung z.B. durch Laserscanner ermöglicht (siehe u.a. die Offenlegungsschrift DE102016120433A1).

Weltweit wurden Verfahren entwickelt, die u.a. zur vollständigen selbständigen Steuerung eines Fahrzeugs geeignet sind (siehe u.a. die Offenlegungsschriften DE102005029336A1 und DE102013003683A1 sowie US9701305B2). Diese Verfahren benötigen jedoch in der Regel eine große Zahl an Sensoren am oder im Fahrzeug selbst (z.B. Laserscanner oder Radarscanner oder Kameras) - sowie häufig eine große Rechenkapazität am oder im Fahrzeug selbst.

Automobile werden heute unter großem Kostendruck konzipiert und gefertigt, so dass im heutigen Serienautomobilen eine derartig große Menge an Rechenleistung und/oder Sensoren nicht zur Verfügung steht, was die Anwendbarkeit der vorgenannten Verfahren häufig nicht möglich macht. Daher kommt dem Automatic Valet Parking auf Basis externer Sensoren und externer Datenverarbeitungsanlagen besondere Bedeutung zu.

DE 10 2009 051 463 B4 offenbart ein Kraftfahrzeug, eine externe Steuervorrichtung sowie ein Verfahren zum Durchführen eines Ausparkvorgangs eines Kraftfahrzeugs.

### Automatic Valet Parking

Bei einem vollautomatisierten (autonomen) sogenannten Valet Parking wird ein Fahrzeug (z.B. ein Automobil, ein LKW, ein Bus, ein Gabelstapler) von seinem Fahrer auf einer Abgabestelle (zum Beispiel vor einem Parkhaus) geparkt und von dort fährt das Fahrzeug in eine Parkposition und/oder kehrt auf Anforderung wieder zur Abgabestelle zurück. Mehrere Offenlegungsschriften (u.a. DE 102012222562A1 sowie WO2016128203A1) zeigen solche Systeme zur Überführung eines Fahrzeugs von einer Startposition in eine Zielposition.

Solche Systeme umfassen eine außerhalb des Fahrzeugs angeordnete zentrale Recheneinheit zur Berechnung einer Trajektorie, die im Rahmen dieser Anmeldung auch als Bewegungsbahn bezeichnet wird, entlang derer sich das Fahrzeug mit einer Fahrzeuggeschwindigkeit autonom von der Startposition in die Zielposition bewegt und eine Übertragungseinrichtung zur Übertragung der Trajektorie an das Fahrzeug. Durch die fahrzeugexterne Recheneinheit wird das Fahrzeug ferngesteuert gefahren. Diese Systeme können ausschließlich oder teilweise auf fahrzeugexternen Sensoren basieren und auf einer fahrzeugexternen Recheneinheit eine Trajektorie berechnen, die dann mittels eines Übertragungsmediums (z.B. W-LAN oder Mobilfunk) an das Fahrzeug übertragen wird.

### Defizite von Automatic Valet Parking Verfahren

Solche Automatic Valet Parking-Lösungen weisen aber auch erhebliche Defizite auf, die ihrer Verbreitung entgegenwirken oder eine Verbreitung verhindern:
Die Anbringung und Nutzung von Umfeldsensoren für Automatic Valet Parking-Verfahren hat hohe Kosten zur Folge. Denn in den bisher bekannten Ausführungen müssen neuartige und teure Sensoren (z.B. Laserscanner) außerhalb des Fahrzeugs im gesamten Parkbereich verbaut werden.

Die Umfeldsensorik für bekannte Automatic Valet Parking Verfahren umfassen in den bisher bekannten Ausführungen mehrere Umfeldsensoren, mit denen ein Parkplatz ausgestattet werden muss. Solche bekannten Umfeldsensoren sind: Lidarsensoren, Ultraschallsensoren, Lasersensoren, und/oder Radarsensoren.

Diese Sensoren müssen angeschafft, montiert, kalibriert, gewartet und regelmäßig funktionsgeprüft werden, um ein sicheres automatisiertes Parken zu ermöglichen.

DE 10 2015 002 405 A1 offenbart ein Verfahren zur Verkehrskoordinierung von Kraftfahrzeugen in einer Parkumgebung mit einer zentralen Recheneinheit, an die Sensordaten geliefert werden. Anhand von Sensordaten werden aktuelle, die Positionen von innerhalb der Parkumgebung betriebenen Kraftfahrzeugen umfassende Verkehrslagedaten der Parkumgebung ermittelt und Sollkorridore für Kraftfahrzeuge anhand der Verkehrslagedaten und eines Kartendatensatzes zu einem Zielort des Kraftfahrzeugs ermittelt und an das jeweilige Kraftfahrzeug übermittelt.

Der Artikel von Kyounghwan An, Cooperative Vehicle Control System based on Fusion Map, Computing and Converging Technology (IC-CCT), 2012, 7th International Konferenz on IEEE, Seiten 94 bis 97, ISBN 978-1-4673-089-6, betrifft das autonome Fahren von Fahrzeugen anhand von extern bestimmten Daten und intern im Fahrzeug bestimmten Daten.

DE 10 2015 007 531 B3 offenbart ein Verfahren zur Steuerung des Verkehrs in einer wenigstens von einer ersten Gruppe von manuell und einer zweiten Gruppe von automatisiert betriebenen Verkehrsteilnehmern genutzten Parkumgebung, wobei eine zentrale Steuereinrichtung verwendet wird und unter Berücksichtigung von sensorisch ermittelten und/oder von Verkehrsteilnehmern übermittelten aktuellen Zustandsinformationen der Verkehrsteilnehmer für jeden Verkehrsteilnehmer eine den zukünftigen Betrieb des Verkehrsteilnehmers beschreibende Anweisungsinformation in einer gemeinsamen Routenplanung für alle die Parkumgebung nutzenden Verkehrsteilnehmer ermittelt und übertragen wird.

US 2020/0064860 A1 offenbart ein Verfahren für den koordinierten Betrieb von Kraftfahrzeugen mit einer Koordinationsvorrichtung, die einen Sensor umfasst sowie eine Rechenvorrichtung und eine Kommunikationsvorrichtung. Es werden mit einem Sensor Orts- und Bewegungsinformationen der Fahrzeuge ermittelt und eine erwartete Trajektorie berechnet sowie geprüft, ob die verschiedenen Trajektorien der Fahrzeuge zeitweise überlappen können, wobei für den Fall, dass eine zeitliche Überlappung stattfindet, Fahrinstruktionen zu wenigstens einem Fahrzeug übermittelt werden.

### Offenbarung der Erfindung

Die der Erfindung zugrundeliegende Aufgabe ist ein sicheres und effizientes autonomes Fahren eines Kraftfahrzeugs in einer vorgebbaren Umgebung, wie beispielsweise einem Parkplatz, Parkhaus, einer Industrieanlage, oder ähnlichen Arealen anzugeben. Insbesondere soll ein effizientes Verfahren und System zum Errichten und Betreiben von Automatic Valet Parking Verfahren bereitgestellt werden, welches die bekannten Nachteile überwindet. Diese Aufgabe wird mittels des jeweiligen Gegenstands der unabhängigen Ansprüche gelöst.

Gelöst wird diese Aufgabe durch ein Verfahren zum ferngesteuerten autonomen Fahren eines Fahrzeugs bei einem Automatic Valet Parking mit den folgenden Verfahrensschritten:
- Erfassen des Fahrzeugs mit Hilfe von wenigstens einem in einer Umgebung des Fahrzeugs angeordneten Sensor, insbesondere Kamera,
- Ermitteln einer Bewegungsbahn für das Fahrzeug mittels einer fahrzeugexternen Verarbeitungseinrichtung,
- Übermitteln der Bewegungsbahn und/oder von Steuerbefehlen betreffend die Bewegungsbahn an das Fahrzeug, und
- Umsetzen der Bewegungsbahn und/oder der Steuerbefehle im Fahrzeug, um das Fahrzeug gemäß der Bewegungsbahn zu bewegen, wobei
   zum Erfassen des Fahrzeugs eine eindeutige Identifikation über Lichtsignale erfolgt wobei das Fahrzeug diese Lichtsignale abgibt, die durch den wenigstens
   einen Sensor erfasst werden und in der Verarbeitungseinrichtung verarbeitet werden, wobei die Lichtsignale durch variierendes oder periodischen Betätigen des Blinklichts und/oder des Bremslichts und/oder des Abblendlichts erzeugt werden. Die Lichtsignale können hierbei codiert sein. Jedem Fahrzeug kann von der Verarbeitungseinrichtung ein bestimmtes Lichtsignal zugeordnet werden, so dass eine eineindeutige Zuordnung zu jedem Fahrzeug möglich ist.

Vorzugsweise wird eine Pose des Fahrzeugs mittels der wenigstens einen Kamera, insbesondere mehrerer Kameras, durch die Verarbeitungseinrichtung ermittelt, wobei insbesondere eine Projektion der Pose auf eine Umgebungskarte erfolgt.

Vorzugsweise wird mittels der durch die wenigstens einen Kamera aufgenommenen Bilder oder Filmsequenzen in der Verarbeitungseinrichtung eine Bilderkennung mittels Bildvergleich und/oder, insbesondere trainierter, neuronaler Netze durchgeführt, wobei Objekte, insbesondere andere Fahrzeuge oder Lebewesen, in der Umgebung des Fahrzeugs erkannt werden, wobei insbesondere die Bewegungsbahn und/oder Steuerbefehle, die an das Fahrzeug übermittelt werden, angepasst werden.

Vorzugsweise werden mehrere Kameras verwendet, wobei insbesondere durch Positionieren von Testkörpern, die von wenigstens zwei Kameras erfasst werden, die Kameras, insbesondere automatisch, kalibriert und/oder auf einer Umgebungskarte positioniert werden.

Vorzugsweise werden zusätzlich Signale wenigstens eines fahrzeuginternen Sensors verwendet wird, um das Fahrzeug zu steuern.

Insbesondere werden die Bewegungsbahn und/oder Steuerbefehle betreffend die Bewegungsbahn periodisch, insbesondere an den Takt des fahrzeuginternen Bussystems angepasst übermittelt.

Vorzugsweise wird das Verfahren zur Ermittlung der Bewegungsbahn automatisch durchgeführt.

Die Aufgabe wird ferner gelöst durch ein System zum ferngesteuerten autonomen Fahren eines Fahrzeugs bei einem Automatic Valet Parking, insbesondere in einer vorgebbaren oder vorgegeben Umgebung, umfassend eine Mehrzahl von fahrzeugexternen Kameras, die ausgebildet sind, Kamerabilder oder Videos wenigstens eines Teils der Umgebung zu erfassen, und eine fahrzeugexterne Verarbeitungseinrichtung, die ausgebildet ist, die Kamerabilder oder Videos zu verarbeiten, wobei die Verarbeitungsvorrichtung ferner dazu eingerichtet ist, wenigstens ein Fahrzeug anhand der Kamerabilder oder Videos zu erkennen und eine Bewegungsbahn für das Fahrzeug zu bestimmen, wobei ferner das System eine Übertragungsvorrichtung umfasst, die ausgebildet ist, die Bewegungsbahn und/oder Steuerbefehle betreffend die Bewegungsbahn an das Fahrzeug zu übermitteln, wobei eine eindeutige Identifikation eines oder mehrerer Fahrzeuge über eine Abgabe von Lichtsignalen des oder der Fahrzeuge stattfindet, wobei die Lichtsignale durch variierendes oder periodisches Betätigen des Blinklichts und/oder des Bremslichts und/oder des Abblendlichts erzeugt werden.

Vorzugsweise ist das System eingerichtet ist, das Fahrzeug von einer Startposition automatisch und/oder autonom zu einer Zielposition zu führen.

Vorzugsweise ist mittels der Kamerabilder und/oder Videos eine Pose des oder der Fahrzeuge ermittelbar, wobei die Pose insbesondere auf einer Umgebungskarte darstellbar ist.

Insbesondere umfasst das System ein Edge Computingsystem, das eingerichtet ist, nur diejenigen Kamerabilder oder Videos, auf denen das oder die Fahrzeuge oder andere Objekte vorhanden sind, die für die Bewegungsbahn relevant sind, insbesondere vorverarbeitet, an die Verarbeitungseinrichtung weiterzuleiten oder weiterzugeben.

Es ist vorzugsweise vorgesehen, dass das System, insbesondere trainierte oder vortrainierte, neuronale Netze und/oder Methoden des Deep Learning und/oder des Reinforcement Learning, insbesondere im Sinne eines Convolutional Neuronal Network, verwendet und/oder anwendet. Hierzu sei verwiesen auf T. Chen, S. Komblith, M. Norouzi, G. Hinton "A Simple Framework for Contrastive Learning of Visual Representations", 2020, https.://arxiv.org/pdf/2002.05079.pdf

Insbesondere ist eine deterministische Überwachungsvorrichtung vorgesehen, die insbesondere ausgebildet ist, Komponenten des Systems, insbesondere Kameras, die Verarbeitungseinrichtung und/oder das Edge Computingsystem, auf Funktionsfähigkeit zu überprüfen.

Nach einem Aspekt wird ein neuartiges Verfahren zum Betreiben eines Fahrzeugs bereitgestellt, wobei das Fahrzeug mittels einer fahrzeugexternen Verarbeitungseinrichtung autonom auf einem Parkplatz von einer Startposition zu einer Zielposition fährt, die auf bereits existierender Sensorik basiert. Nach noch einem Aspekt wird ein Fahrzeug bereitgestellt, welches eingerichtet ist, das Verfahren durchzuführen. Gemäß einem weiteren Aspekt wird ein Computerprogramm bereitgestellt, welches Programmcode und/oder trainierte neuronale Netze zur Durchführung des Verfahrens zum Betreiben eines Fahrzeugs umfasst, wenn das Computerprogramm auf einem Computer ausgeführt wird.

Es wird insbesondere der technische Vorteil bewirkt, dass das Fahrzeug autonom in einem Parkhaus oder auf einem Parkplatz parken kann, welches/r nicht mehr kostenintensiv und technisch aufwändig nachgerüstet werden muss. Insbesondere kann das Fahrzeug u.a. durch eine auf bereits existierenden Überwachungskameras basierenden Sensorik sicher bewegt werden.

Ein weiterer technischer Vorteil ist, dass das Fahrzeug keine weitere Ausrüstung durch Recheneinheiten oder Sensorik benötigt.

Ein Parkplatz im Sinne der vorliegenden Erfindung kann auch als eine Parkfläche bezeichnet werden und dient als Abstellfläche für Fahrzeuge. Der Parkplatz kann nach einer Ausführungsform von einem Parkhaus umfasst sein. Autonom im Sinne der vorliegenden Erfindung bedeutet insbesondere, dass das Fahrzeug ohne einen Eingriff eines Fahrers mittels eines ferngesteuerten Eingriffs auf dem Parkplatz navigiert oder fährt.

Ein Fahrzeug im Sinne der vorliegenden Erfindung ist z.B. ein Automobil, ein LKW, ein Bus, ein Gabelstapler, ein People Mover, ein Roboter, ö.ä.. Die vorliegende Erfindung bezieht sich auch auf mehrere Fahrzeuge oder eine Kombination verschiedener Fahrzeuge.

### Ausführungsformen

1. In einer Ausführungsform ist vorgesehen, dass das geparkte Fahrzeug mittels der fahrzeugexternen Verarbeitungseinrichtung aus der Parkposition ausparkt, mittels der fahrzeugexternen Verarbeitungseinrichtung von der Parkposition zurück zur Startposition oder zu einer weiteren Zielposition autonom fährt und sich dort mittels der fahrzeugexternen Verarbeitungseinrichtung autonom abstellt. Die weitere Zielposition kann eine Servicestation sein, an welcher eine Dienstleistung am Fahrzeug durchgeführt wird. Zum Beispiel kann das Fahrzeug an der Servicestation betankt (auch elektrisch), gewaschen, inspiziert, gewartet oder repariert werden.
2. Gemäß einer weiteren Ausführungsform ist vorgesehen, dass das Fahrzeug mittels der fahrzeugexterner Kamerasensorik und Verarbeitungseinrichtung eindeutig identifiziert wird. Unter einer kamerasensorik wird im Rahmen dieser Anmeldung auch eine Kamera verstanden.
3. Gemäß einer weiteren Ausführungsform ist vorgesehen, dass das die Pose (Ort und Fahrtrichtung) des Fahrzeugs mittels der fahrzeugexternen Kamerasensorik und einer externen Verarbeitungseinrichtung zweifelsfrei identifiziert wird.
4. Gemäß einer weiteren Ausführungsform ist vorgesehen, dass Objekte (z.B. auf der Parkfläche oder im Fahrbereich) mittels der fahrzeugexterner Kamerasensorik und einer externen Verarbeitungseinrichtung erkannt und identifiziert werden, so dass sie z.B. umfahren werden können.
5. Gemäß einer weiteren Ausführungsform ist vorgesehen, dass die fahrzeugexterne Kamerasensorik und Verarbeitungseinrichtung automatisch eingerichtet und kalibriert wird. Dies geschieht durch ein automatisches Verfahren und System und die Ausbringung von Testkörpern auf die zu beobachtende Fläche. Die Kameras werden hierbei beispielsweise durch Bildverarbeitung und Triangulation kalibriert.
6. Gemäß einer weiteren Ausführungsform ist vorgesehen, dass bestehende fahrzeugexterne Kamerasensorik (z.B. bereits bestehende Überwachungskameras und herkömmliche Umfeldsensorik (wie Lidarsensoren, Ultraschallsensoren, Lasersensoren, oder Radarsensoren) automatisch kombiniert werden.
7. Gemäß einer weiteren Ausführungsform ist vorgesehen, dass die fahrzeugexterne Verarbeitungseinrichtung selbstlernend ausgeführt wird.
8. Gemäß einer weiteren Ausführungsform ist vorgesehen, dass fahrzeugexterne Kamerasensorik mit fahrzeuginternen Sensoren (z.B. Raddrehzahlsensoren) automatisch kombiniert werden.

### Ausführungsbeispiele

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

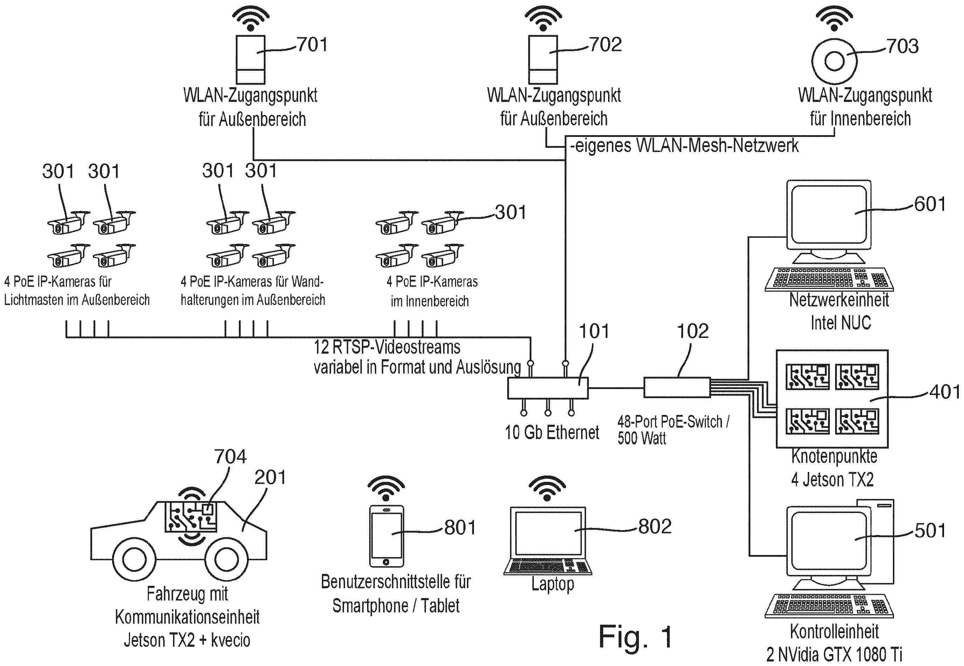

Ein Aspekt sieht ein Verfahren und/oder System zum ferngesteuerten autonomen Fahren eines Fahrzeugs gemäß Fig. 1 vor.

Es ist vorgesehen, dass das geparkte Fahrzeug mittels der fahrzeugexternen Verarbeitungseinrichtung aus der Parkposition ausparkt, mittels der fahrzeugexternen Verarbeitungseinrichtung von der Parkposition zurück zur Startposition oder mittels der fahrzeugexternen Verarbeitungseinrichtung oder zu einer weiteren Zielposition autonom fährt und sich dort mittels der fahrzeugexternen Verarbeitungseinrichtung autonom abstellt. Die weitere Zielposition kann eine Servicestation sein, an welcher eine Dienstleistung am Fahrzeug durchgeführt wird. Zum Beispiel kann das Fahrzeug an der Servicestation betankt (auch elektrisch), gewaschen, inspiziert, gewartet oder repariert werden.

Ein weiterer Aspekt ist ein Verfahren und/oder System zur eindeutigen Identifikation des Fahrzeugs mittels fahrzeugexterner Kamerasensorik und Verarbeitungseinrichtung durch Blinkmuster und weitere Lichtzeichen oder eine Abfolge derer.

Ein Aspekt ist ein Verfahren und/oder System zur Ermittlung der Pose (Ort und Fahrtrichtung) des Fahrzeugs ausschließlich aus Kamerabildern mittels fahrzeugexterner Kamerasensorik in einer externen Verarbeitungseinrichtung und Projektion dieser Pose des Fahrzeugs auf eine Karte.

Ein weiterer Aspekt ist ein Verfahren und/oder System zur Erkennung von Objekten (z.B. auf der Parkfläche oder im Fahrbereich) mittels fahrzeugexterner Kamerasensorik in einer externen Verarbeitungseinrichtung durch Bildvergleich und trainierte neuronale Netze.

Ein Aspekt ist ein Verfahren und/oder System zum automatischen Kalibrieren und/oder Positionieren auf einer Karte der fahrzeugexternen Kamerasensorik durch Testkörper, die gleichzeitig von verschiedenen Kamerasensoren oder Kameras erfasst werden.

Ein Aspekt ist ein Verfahren und/oder System zum automatischen Kombinieren fahrzeugexterner Kamerasensorik weiterer Umfeldsensorik (wie Lidarsensoren, Ultraschallsensoren, Lasersensoren, oder Radarsensoren).

Ein Aspekt ist ein Verfahren und/oder System zur automatischen Kombination von fahrzeugexterner Kamerasensorik mit fahrzeuginternen Sensoren (z.B. Raddrehzahlsensoren).

Ein Aspekt ist eine automatisch selbstlernende fahrzeugexterne Verarbeitungseinrichtung durch den Einsatz von Neuronalen Netzen und Methoden des Deep Learning und/oder des Reinforcement Learning im Sinne eines Convolutional Neuronal Network.

Ein Aspekt ist ein Verfahren und/oder System zur fahrzeugexternen Berechnung und Steuerung in einem nicht ortsfesten Datenverarbeitungssystem in einer Cloud-Anwendung.

Ein Aspekt ist ein Verfahren und/oder System mit Kontrollsystem oder einer deterministischen Überwachungsvorrichtung, welches eingerichtet ist, das Verfahren zur Ermittlung einer Trajektorie automatisch durchzuführen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Ein Ablauf des Verfahrens zum Betreiben eines Fahrzeugs mittels einer fahrzeugexternen Verarbeitungseinrichtung, die als künstliche Intelligenz ausgebildet ist, sieht vor, dass das Fahrzeug ferngesteuert fährt.

Es ist vorgesehen, dass das Fahrzeug von einer fahrzeugexternen Verarbeitungseinrichtung empfangene Trajektorien und Fahrbefehle umsetzt und autonom auf einem Parkplatz von einer Startposition zu einer Zielposition fährt.

Nach einer Ausführungsform ist die Startposition eine Abgabeposition, an welcher das Fahrzeug von seinem Fahrer abgestellt werden kann, damit das Fahrzeug anschließend einen autonomen Parkvorgang durchführen kann.

Nach einer Ausführungsform ist die Zielposition eine Parkposition, an welcher das Fahrzeug einparken wird.

Nach einer anderen Ausführungsform ist vorgesehen, dass die Startposition eine Parkposition ist und die Zielposition eine Abholposition, an welcher ein Fahrer sein Fahrzeug nach einem Ende eines autonomen Parkvorgangs abholen kann.

Nach einer Ausführungsform sind die Abgabeposition und die Abholposition verschieden. Nach einer weiteren Ausführungsform sind die Abholposition und die Abgabeposition identisch.

Nach einer Ausführungsform ist vorgesehen, dass das Fahrzeug mittels einer fahrzeugexternen Verarbeitungseinrichtung von der Startposition zu einer Zielposition und von dort zu einer weiteren Zielposition oder zurück zu der Startposition fährt. Die weitere Zielposition ist insbesondere eine Abholposition.

Nach einer Ausführungsform ist vorgesehen, dass das Fahrzeug mittels einer fahrzeugexternen Verarbeitungseinrichtung von der Startposition zu einer Parkposition autonom fährt, dort unterstützungsfrei autonom einparkt, zeitlich später mittels einer fahrzeugexternen Verarbeitungseinrichtung autonom ausparkt und unterstützungsfrei zurück zur Startposition autonom fährt.

Nach einer Ausführungsform ist vorgesehen, dass das Fahrzeug basierend auf einer digitalen Karte des Parkplatzes mittels einer fahrzeugexternen Verarbeitungseinrichtung autonom auf dem Parkplatz fährt.

In einer Ausführungsform ist vorgesehen, dass ein Fahrzeug eingerichtet ist, empfangene Trajektorien und Fahrbefehle umzusetzen.

Nach einer Ausführungsform umfasst das Fahrzeug 201 ein Fahrzeug mit serienmäßiger Ausstattung zur elektrischen Aktuatorik an Lenkung, Antrieb und Bremse (z.B. durch E-Fahrpedal oder Drive-by-Wire Funktionalität, E-Bremse, Abstandstempomat, Einparkassistent o.ä.) sowie einem Empfangsmodul (z.B. W-Lan oder Mobilfunk). Mittels einer fahrzeugexternen Verarbeitungseinrichtung basierend auf den Umfelddaten und der Karte des Parkplatzes wird eine Solltrajektorie, die das Fahrzeug mittels der Steuerungseinrichtung abfahren soll, an das Fahrzeug übermittelt.

Nach einer Ausführungsform ist das Fahrzeug 201 in der Lage, die von einer fahrzeugexternen Verarbeitungseinrichtung empfangenen Fahrbefehle und Trajektorien mit den internen Sensoren (z.B. Raddrehwinkelsensor, Raddrehzahlsensor) zu vergleichen und/oder zu fusionieren.

Fig. 1 zeigt:
- ein Fahrzeug 201, welches eingerichtet ist, empfangene Trajektorien und Fahrbefehle umzusetzen.
- Überwachungskameras 301, die geeignet sind, einen Videostream (z.B. als RTSP) an das Gesamtsystem zu übermitteln.
- Edgesystem 401, welches eingerichtet ist, Computerprogramme (z.B. trainierte neuronale Netze) zur Objekterkennung zu verwenden.
- Kontrollsystem, das auch als Verarbeitungseinheit bezeichnet wird, 501, welches eingerichtet ist, das Verfahren zur Ermittlung einer Trajektorie durchzuführen sowie jedem gefahrenen Fahrzeug ein eindeutiges visuelles Muster zuzuordnen.
- Network Management-Einheit, die auch als deterministische Überwachungsvorrichtung bezeichnet wird, 601, welche eingerichtet ist, das Gesamtsystem zu überwachen, Fehlerkorrekturen durchzuführen und mit weiteren Systemen (z.B. Parkhaussysteme, Notfallsysteme, Fahrzeugproduktionssysteme) zu kommunizieren sowie Notfallmaßnahmen (wie z.B. Notstop oder eine teilweise oder vollständige Systemabschaltung) durchzuführen.
- Kommunikationseinheit 701, 702, 703, 704 welches eingerichtet ist, Trajektorien und Fahrbefehle an das Fahrzeug zu übermitteln.
- Anforderungseinheit 801, 802, welches eingerichtet ist, das Fahrzeug 201 anzufordern und/oder das Verfahren zu starten und/oder zu beenden und dies an das Fahrzeug 201 zu übermitteln.

Das Edge-System 401 bzw. die Edge Nodes erkennen, vorzugsweise mit Unterstützung der Verarbeitungseinrichtung 501, ob ein Fahrzeug 201 im Blickfeld einer Kamera 301 oder mehrerer Kameras 301 ist. Mittels des Edge-Systems 401 werden somit Daten der Kameras 301 ausgewählt und an die Verarbeitungseinheit 501 weitergeleitet, die das Fahrzeug 201 im Blick haben. Zudem kann das Edge-System 401 dazu dienen, andere Gegenstände oder Lebewesen, die neu in das Blickfeld einer Kamera 301 gelangen, zu erkennen und diese Information an die Verarbeitungseinrichtung 501 weiterzugeben. Das Edge-System 401 kann als künstliche Intelligenz trainiert sein auf verschiedene Objektarten, wodurch unterschiedliche Reaktionen erzielt werden können. Wird beispielsweise ein Kind in der Nähe des autonom fahrenden Fahrzeugs (201) gesichtet, kann ein Notstopp des Fahrzeugs 201 eingeleitet werden. Sollte ein nicht lebendes Objekt entdeckt werden, kann vorgesehen sein, die Geschwindigkeit zu drosseln oder das Fahrzeug in eine andere Richtung zu lenken oder eine andere Trajektorie bzw. Bewegungsbahn zu fahren. Die entsprechenden Bewegungsbahnen bzw. Trajektorien werden über die Kommunikationseinheiten, hier ausgebildet als Wifi-Sender und/oder Empfänger (WLAN) 701, 702 oder 703 an das Fahrzeug 201 über die Kommunikationseinheit 704 drahtlos gesendet. Das Fahrzeug 201 kann selbst über WLAN drahtlos Sensorsignale dem erfindungsgemäßen System bzw. Verarbeitungseinrichtung 501 oder der Überwachungsvorrichtung 601 zukommen lassen. Hierdurch kann überprüft werden, ob das Fahrzeug 201 tatsächlich die Steuerbefehle ausführt und die Bewegungsbahn bzw. die Trajektorie auch einhält. Diese Überprüfung kann auch durch Bildverarbeitung der durch die Kameras 301 aufgenommenen Bilder durchgeführt werden.

Durch Verwendung des Edge-Systems 401 werden der Verarbeitungseinrichtung 501 nur relevante Bilder und/oder Videos und/oder Informationen übermittelt, um die Auslastung der fahrzeugexternen Verarbeitungseinrichtung 501 zu minimieren. Das Fahrzeug 201 kann mit einem Smartphone oder einem Tablet 801 oder einem Laptop beispielsweise auch über WLAN angefordert werden. Genauso kann über diese Anforderungseinheiten 801, 802 definiert werden, wohin das jeweilige Fahrzeug 201 autonom gefahren werden soll.

Die Überwachungsvorrichtung 601 prüft, ob alle relevanten Kameras 301 funktionsfähig sind. Zudem prüft die Überwachungsvorrichtung 601, ob alle systemrelevanten Elemente funktionsfähig sind. Zudem überprüft diese Überwachungsvorrichtung 601 ohne künstliche Intelligenz, also deterministisch, ob Veränderungen in einem Bild auftreten, die von der Verarbeitungseinrichtung 501 nicht erkannt werden. Für den Fall, dass sich eine Diskrepanz zwischen dem Ergebnis der Überwachungsvorrichtung 601 und der Verarbeitungseinrichtung 501 ergibt, wird der Fahrbereich des Fahrzeugs 201 blockiert. Es handelt sich bei der Überwachungsvorrichtung 601 somit um ein deterministisches Sicherheits- und Rückfallsystem.

Die Bewegungsbahn bzw. Trajektorie kann ein Vektor sein, der als Werte eine Geschwindigkeit, einen Lenkwinkel und beispielsweise die Dauer des Beibehaltens dieser Steuerparameter aufweist. Die Bewegungsbahn bzw. Trajektorie ist auf dem CAN-Bus des Fahrzeugs 201 angepasst und kann bei einem mit 25 Hz getakteten CAN-Bus beispielsweise jede 25tel Sekunde geändert werden. In dieser Taktfrequenz können Bewegungsbahnen bzw. Trajektorien übermitteln werden.

Andere Fahrzeuge und Objekte werden in der externen Verarbeitungseinrichtung erkannt und klassifiziert. In einer Ausführungsform ist vorgesehen, dass das Fahrzeug autonom anhält oder stoppt, wenn notwendig, oder dass es einen Ausweichkurs um die Fahrzeuge und/oder die Objekte berechnet und diesen durch die externe Verarbeitungseinrichtung unterstützt abfährt.

Zur eindeutigen Identifikation der Fahrzeuge mittels externer Kamerasensoren und einer externen Verrechnungseinheit wird jedem Fahrzeug ein individueller Blinkcode zugeordnet. Hierbei wird jedem der gleichzeitig auf der Parkfläche bewegten Fahrzeuge ein individuelles Blinkmuster zugeordnet. Die verwendeten visuellen Muster können z.B. Blinkmuster oder Lichtzeichenabfolgen sein. So kann z.B. ein Fahrzeug durch 3 Wechselblinkzeichen links und rechts binnen 3 Sekunden durch die externen Kamerasensoren eindeutig identifiziert werden. Diese Zuordnung ermöglicht es nun der Kontrolleinheit das Fahrzeug zu identifizieren und zu steuern. Unter einer Verrechnungseinheit wird im Rahmen dieser Anmeldung auch die Verarbeitungseinrichtung verstanden.

Das System ermittelt die Pose (Ort und Fahrtrichtung) des Fahrzeugs ausschließlich aus zweidimensionalen Kamerabildern mittels fahrzeugexterner Kamerasensorik in einer externen Verarbeitungseinrichtung und projiziert diese Pose des Fahrzeugs als virtuelles Fahrzeug auf eine Karte der Umgebung.

Nach einer Ausführungsform ist die Kommunikation zwischen Fahrzeug und externer Verrechnungseinheit verschlüsselt oder die einzelnen Fahrbefehle werden durch Schlüssel validiert.

Zur automatisierten effizienten Kalibrierung der fahrzeugexternen Kamerasensoren wurde ein Kallibrierungssystem entwickelt, bei dem Testkörper zufällig auf die zu beobachtende Parkfläche ausgebracht werden. Durch die redundante Anbringung von Kamerasensoren wird daher jeder Textkörper von mehr als einer Kamera erfasst. Werden nun diese z.B. gleichgroßen aber verschiedenfarbigen Testkörper (z.B. gelbe, grüne, rote und blaue Scheiben oder Würfel mit einem Durchmesser von jeweils 20cm) auf der zu beobachtenden Parkfläche verschoben, so kann das Kontrollsystem 501 die Kamerapositionen, deren Winkel zur beobachteten Parkfläche, sowie deren Distanzen untereinander berechnen und damit die Kamerasensoren eindeutig auf einer Karte der zu beobachtenden Parkfläche positionieren.

In den Zeichnungen sind jeweils gleiche oder gleichartige Elemente und/oder Teile mit denselben Bezugsziffern versehen, so dass von einer erneuten Vorstellung jeweils abgesehen wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezuaszeichenliste

- 101: Ethernetanschluss
- 102: Switch
- 201: Fahrzeug
- 301: Überwachungskamera
- 401: Edge-System
- 501: Verarbeitungseinrichtung
- 601: Überwachungsvorrichtung
- 701: Kommunikationseinheit
- 702: Kommunikationseinheit
- 703: Kommunikationseinheit
- 704: Kommunikationseinheit
- 801: Anforderungseinheit
- 802: Anforderungseinheit

## Patentansprüche

1. Verfahren zum ferngesteuerten autonomen Fahren eines Fahrzeugs (201) bei einem Automatic Valet Parking mit den folgenden Verfahrensschritten:
Erfassen des Fahrzeugs (201) mit Hilfe von wenigstens einem in einer Umgebung des Fahrzeugs (201) angeordneten Sensor, insbesondere Kamera (391),
Ermitteln einer Bewegungsbahn für das Fahrzeug (201) mittels einer fahrzeugexternen Verarbeitungseinrichtung (501),
Übermitteln der Bewegungsbahn und/oder von Steuerbefehlen betreffend die Bewegungsbahn an das Fahrzeug (201), und
Umsetzen der Bewegungsbahn und/oder der Steuerbefehle im Fahrzeug (201), um das Fahrzeug (201) gemäß der Bewegungsbahn zu bewegen, **dadurch gekennzeichnet, dass**
zum Erfassen des Fahrzeugs (201) eine eindeutige Identifikation über Lichtsignale erfolgt, wobei das Fahrzeug (201) diese Lichtsignale abgibt
die durch den wenigstens einen Sensor erfasst werden und in der Verarbeitungseinrichtung (501) verarbeitet werden, wobei die Lichtsignale durch variierendes oder periodisches Betätigen des Blinklichts und/oder des Bremslichts und/oder des Abblendlichts erzeugt werden.

2. Verfahren nach Anspruch 1, **dadurch gekennzeichnet, dass** eine Pose des Fahrzeugs (201) mittels der wenigstens einen Kamera (301), insbesondere mehrerer Kameras (301), durch die Verarbeitungseinrichtung (501) ermittelt wird, wobei insbesondere eine Projektion der Pose auf eine Umgebungskarte erfolgt.

3. Verfahren nach Anspruch 1 oder 2, **dadurch gekennzeichnet, dass** mittels der durch die wenigstens einen Kamera (301) aufgenommenen Bilder oder Filmsequenzen in der Verarbeitungseinrichtung (501) eine Bilderkennung mittels Bildvergleich und/oder, insbesondere trainierter, neuronaler Netze durchgeführt wird, wobei Objekte, insbesondere andere Fahrzeuge oder Lebewesen, in der Umgebung des Fahrzeugs (201) erkannt werden, wobei insbesondere die Bewegungsbahn und/oder Steuerbefehle, die an das Fahrzeug (201) übermittelt werden, angepasst werden.

4. Verfahren nach Anspruch 1 bis 3, **dadurch gekennzeichnet, dass** mehrere Kameras (301) verwendet werden, wobei insbesondere durch Positionieren von Testkörpern, die von wenigstens zwei Kameras (301) erfasst werden, die Kameras (301), insbesondere automatisch, kalibriert und/oder auf einer Umgebungskarte positioniert werden.

5. Verfahren nach einem der Ansprüche 1 bis 4, **dadurch gekennzeichnet, dass** zusätzlich Signale wenigstens eines fahrzeuginternen Sensors verwendet werden, um das Fahrzeug (201) zu steuern.

6. Verfahren nach einem der Ansprüche 1 bis 5, **dadurch gekennzeichnet, dass** die Bewegungsbahn und/oder Steuerbefehle betreffend die Bewegungsbahn periodisch, insbesondere an den Takt des fahrzeuginternen Bussystems angepasst übermittelt werden.

7. Verfahren nach einem der Ansprüche 1 bis 6, **dadurch gekennzeichnet, dass** das Verfahren zur Ermittlung der Bewegungsbahn automatisch durchgeführt wird.

8. System zum ferngesteuerten autonomen Fahren eines Fahrzeugs (201) bei einem Automatic Valet Parking, insbesondere in einer vorgebbaren oder vorgegeben Umgebung, umfassend eine Mehrzahl von fahrzeugexternen Kameras (301), die ausgebildet sind, Kamerabilder oder Videos wenigstens eines Teils der Umgebung zu erfassen, und eine fahrzeugexterne Verarbeitungseinrichtung (501), die ausgebildet ist, die Kamerabilder oder Videos zu verarbeiten, wobei die Verarbeitungseinrichtung (501) ferner dazu eingerichtet ist, wenigstens ein Fahrzeug (201) anhand der Kamerabilder oder Videos zu erkennen und eine Bewegungsbahn für das Fahrzeug (201) zu bestimmen, wobei ferner das System eine Übertragungsvorrichtung umfasst, die ausgebildet ist, die Bewegungsbahn und/oder Steuerbefehle betreffend die Bewegungsbahn an das Fahrzeug (201) zu übermitteln, **dadurch gekennzeichnet, dass** eine eindeutige Identifikation eines oder mehrerer Fahrzeuge (201) über eine Abgabe von Lichtsignalen des oder der Fahrzeuge (201) stattfindet, wobei die Lichtsignale durch variierendes oder periodisches Betätigen des Blinklichts und/oder des Bremslichts und/oder des Abblendlichts erzeugt werden.

9. System nach Anspruch 8, **dadurch gekennzeichnet, dass** das System eingerichtet ist, das Fahrzeug von einer Startposition automatisch und/oder autonom zu einer Zielposition zu führen.

10. System nach Anspruch 8 oder 9, **dadurch gekennzeichnet, dass** mittels der Kamerabilder und/oder Videos eine Pose des oder der Fahrzeuge (201) ermittelbar ist, wobei die Pose insbesondere auf einer Umgebungskarte darstellbar ist.

11. System nach einem der Ansprüche 8 bis 10, **dadurch gekennzeichnet, dass** das System ein Edge Computingsystem (401) umfasst, das eingerichtet ist, nur diejenigen Kamerabilder oder Videos, auf denen das oder die Fahrzeuge (201) oder andere Objekte vorhanden sind, die für die Bewegungsbahn relevant sind, insbesondere vorverarbeitet, an die Verarbeitungseinrichtung (501) weiterzuleiten oder weiterzugeben.

12. System nach einem der Ansprüche 8 bis 11, **dadurch gekennzeichnet, dass** das System, insbesondere trainierte oder vortrainierte, neuronale Netze und/oder Methoden des Deep Learning und/oder des Reinforcement Learning, insbesondere im Sinne eines Convolutional Neuronal Network, verwendet und/oder anwendet.

13. System nach einem der Ansprüche 8 bis 12, **dadurch gekennzeichnet, dass** eine deterministische Überwachungsvorrichtung (601) vorgesehen ist, die insbesondere ausgebildet ist, Komponenten des Systems, insbesondere Kameras (301), die Verarbeitungseinrichtung (501) und/oder das Edge Computingsystem (401), auf Funktionsfähigkeit zu überprüfen.

## Claims

1. A method for remote-controlled autonomous driving of a vehicle (201) in automatic valet parking having the following method steps:
capturing the vehicle (201) with the aid of at least one sensor, in particular camera (391), arranged in the surroundings of the vehicle (201),
determining a movement path for the vehicle (201) by means of a processing device (501) located outside the vehicle,
transmitting the movement path and/or control commands regarding the movement path to the vehicle (201), and
implementing the movement path and/or the control commands in the vehicle (201), in order to move the vehicle (201) in accordance with the movement path, **characterized in that** in order to capture the vehicle (201), a clear identification is made via light signals, wherein the vehicle (201) outputs these light signals,
which are captured by the at least one sensor and are processed in the processing device (501), wherein the light signals are generated by actuating the flasher light and/or the brake light and/or the dimmed headlights in a varying or periodical manner.

2. The method according to Claim 1, **characterized in that** a pose of the vehicle (201) is determined by means of the at least one camera (301), in particular multiple cameras (301), by the processing device (501), wherein the pose is in particular projected onto a surroundings map.

3. The method according to Claim 1 or 2, **characterized in that** objects, in particular other vehicles or living creatures, are recognized in the surroundings of the vehicle (201) by means of the images or film sequences acquired at least by one camera (301), whereas an image recognition by means of image comparison and/or, in particular trained, neural networks is performed in the processing device (501), wherein in particular the movement path and/or control commands, which are transmitted to the vehicle (201), are adapted.

4. The method according to any one of Claims 1 to 3, **characterized in that** multiple cameras (301) are used, wherein the cameras (301) are calibrated, in particular automatically, and/or positioned on a surroundings map, in particular by positioning test bodies which are captured by at least two cameras (301).

5. The method according to any one of Claims 1 to 4, **characterized in that** signals of at least one sensor located inside the vehicle are additionally used in order to control the vehicle (201).

6. The method according to any one of Claims 1 to 5, **characterized in that** the movement path and/or control commands regarding the movement path are transmitted periodically, in particular adapted to the clock of the bus system located inside the vehicle.

7. The method according to any one of Claims 1 to 6, **characterized in that** the method for determining the movement path is performed automatically.

8. A system for remote-controlled autonomous driving of a vehicle (201) in automatic valet parking, in particular in predefinable or predefined surroundings, comprising a plurality of cameras (301) located outside the vehicle, which are configured to capture camera images or videos of at least a part of the surroundings, and a processing device (501) located outside the vehicle, which is configured to process the camera images or videos, wherein the processing device (501) is further designed to recognize at least one vehicle (201) on the basis of the camera images or videos and to determine a movement path for the vehicle (201), wherein the system further comprises a transfer device which is configured to transmit the movement path and/or control commands regarding the movement path to the vehicle (201), **characterized in that** a clear identification of one or more vehicles (201) takes place via an output of light signals of the vehicle or vehicles (201), wherein the light signals are generated by actuating the flasher light and/or the brake light and/or the dimmed headlights in a varying or periodical manner.

9. The system according to Claim 8, **characterized in that** the system is designed to guide the vehicle from a starting position automatically and/or autonomously to a target position.

10. The system according to Claim 8 or 9, **characterized in that** a pose of the vehicle or vehicles (201) can be determined by means of the camera images and/or videos, wherein the pose can in particular be represented on a surroundings map.

11. The system according to any one of Claims 8 to 10, **characterized in that** the system comprises an edge computing system (401) which is designed to forward or pass on only those camera images or videos, on which the vehicle or vehicles (201) or other objects which are relevant to the movement path exist, in particular in a pre-processed manner, to the processing device (501).

12. The system according to any one of Claims 8 to 11, **characterized in that** the system uses and/or utilizes, in particular trained or pre-trained, neural networks and/or deep learning and/or reinforcement learning methods, in particular within the meaning of a convolutional neural network.

13. The system according to any one of Claims 8 to 12, **characterized in that** a deterministic monitoring device (601) is provided, which is in particular configured to verify that components of the system, in particular cameras (301), the processing device (501) and/or the edge computing system (401), are in good working order.

## Revendications

1. Procédé de conduite autonome télécommandée d'un véhicule (201) dans le cas d'un Valet Parking (déplacement vers un emplacement de parking) automatique, comprenant les étapes de procédé suivantes :
Détection du véhicule (201) à l'aide d'au moins un capteur, en particulier une caméra (391), disposé dans un environnement du véhicule (201),
Détermination d'une trajectoire de déplacement pour le véhicule (201) au moyen d'un dispositif de traitement (501) externe au véhicule,
Transmission au véhicule (201) de la trajectoire de déplacement et/ou des instructions de commande concernant la trajectoire de déplacement, et
Conversion dans le véhicule (201) de la trajectoire de déplacement et/ou les instructions de commande de façon à déplacer le véhicule (201) selon la trajectoire de déplacement, **caractérisé en ce que**
pour détecter le véhicule (201), on procède à une identification univoque par des signaux lumineux, le véhicule (201) émettant ces signaux lumineux qui sont détectés par ledit au moins un capteur et traités dans le dispositif de traitement (501), les signaux lumineux étant générés par l'actionnement variable ou périodique du feu clignotant et/ou du feu de stop et/ou du feu de croisement.

2. Procédé selon la revendication 1, **caractérisé en ce qu'**une pose du véhicule (201) est déterminée par le dispositif de traitement (501) au moyen de ladite au moins une caméra (301), notamment de plusieurs caméras (301), une projection de la pose sur une carte de l'environnement étant notamment réalisée.

3. Procédé selon la revendication 1 ou la revendication 2, **caractérisé en ce qu'**au moyen des images ou séquences de film enregistrées par ladite au moins une caméra (301), une reconnaissance d'image est effectuée dans le dispositif de traitement (501) au moyen d'une comparaison d'images et/ou de réseaux neuronaux, en particulier ayant fait l'objet d'apprentissages, dans lequel des objets, en particulier d'autres véhicules ou êtres vivants, étant reconnus dans l'environnement du véhicule (201), la trajectoire de déplacement et/ou les instructions de commande transmises au véhicule (201) étant en particulier adaptées.

4. Procédé selon les revendications 1 à 3, **caractérisé en ce que** l'on utilise plusieurs caméras (301), et dans lequel, notamment en positionnant des corps de test détectés par au moins deux caméras (301), on calibre les caméras (301) et/ou on les positionne sur une carte de l'environnement, notamment automatiquement.

5. Procédé selon l'une des revendications 1 à 4, **caractérisé en ce que** l'on utilise en outre des signaux d'au moins un capteur interne au véhicule pour commander le véhicule (201).

6. Procédé selon l'une des revendications 1 à 5, **caractérisé en ce que** la trajectoire de déplacement et/ou des instructions de commande concernant la trajectoire de déplacement sont transmises périodiquement, en particulier de manière adaptée à la cadence du système de bus interne au véhicule.

7. Procédé selon l'une des revendications 1 à 6, **caractérisé en ce que** le procédé de détermination de la trajectoire de déplacement est réalisé automatiquement.

8. Système pour la conduite autonome télécommandée d'un véhicule (201) dans le cas d'un Valet Parking (déplacement vers un emplacement de parking), en particulier dans un environnement pouvant être prédéfini ou prédéterminé, comprenant une pluralité de caméras (301) externes au véhicule, qui sont conçues pour saisir des images de caméra ou des vidéos d'au moins une partie de l'environnement, et un dispositif de traitement (501) externe au véhicule, qui est conçu pour traiter les images de caméra ou les vidéos, le dispositif de traitement (501) étant en outre conçu pour reconnaître au moins un véhicule (201) à l'aide des images de caméra ou des vidéos et pour déterminer une trajectoire de déplacement pour le véhicule (201), le système comprenant en outre un dispositif de transmission qui est conçu pour transmettre au véhicule (201) la trajectoire de déplacement et/ou des instructions de commande concernant la trajectoire de déplacement, **caractérisé en ce qu'**une identification univoque d'un ou de plusieurs véhicules (201) a lieu par une émission de signaux lumineux du ou des véhicules (201), les signaux lumineux étant générés par un actionnement variable ou périodique du feu clignotant et/ou du feu de stop et/ou du feu de croisement.

9. Système selon la revendication 8, **caractérisé en ce que** le système est agencé pour guider le véhicule d'une position de départ à une position d'arrivée de manière automatique et/ou autonome.

10. Système selon la revendication 8 ou la revendication 9, **caractérisé en ce qu'**une pose du ou des véhicules (201) est apte à être déterminée au moyen des images de la caméra et/ou des vidéos, la pose pouvant notamment être représentée sur une carte des environs.

11. Système selon l'une des revendications 8 à 10, **caractérisé en ce que** le système comprend un système (401) de calcul périphérique, qui est agencé de façon à ne transmettre ou ne transférer au dispositif de traitement (501) que les images de caméra ou les vidéos sur lesquelles le ou les véhicules (201) ou d'autres objets sont présents et qui sont pertinents pour la trajectoire de déplacement, notamment prétraitées.

12. Système selon l'une des revendications 8 à 11, **caractérisé en ce que** le système utilise et/ou applique des réseaux neuronaux, notamment ayant fait l'objet d'un apprentissage ou d'un pré- apprentissage, et/ou des méthodes d'apprentissage profond et/ou d'apprentissage par renforcement, notamment au sens d'un réseau neuronal convolutionnel.

13. Système selon l'une des revendications 8 à 12, **caractérisé en ce qu'**il est prévu un dispositif (601) de surveillance déterministe qui est notamment conçu de façon à vérifier le bon fonctionnement de composants du système, en particulier de caméras (301), du dispositif de traitement (501) et/ou du système (401) de calcul périphérique.
